# EUROPEAN PATENT APPLICATION

(11) **EP 4 442 453 A1**
(43) Date of publication of application: **09.10.2024**
(21) Application number: 24168764.9
(22) Date of filing: 05.04.2024
(51) Int. Cl.: B32B 15/14, B32B 7/12, B32B 15/20, B32B 27/32, B32B 27/34, B32B 27/36

(54) **FILM FOR CELL POUCH WITH MINIMAL DEFORMATION OF LAMINATE AND MANUFACTURING METHOD THEREOF**

(30) Priority: 06.04.2023 KR 20230045412
(71) Applicant: Youlchon Chemical Co., Ltd., Seoul 07057 (KR)
(72) Inventor: SONG, Nok Jung, 07057 Seoul (KR); HAN, Hee Sik, 15430 Ansan-si (KR); LEE, Ji Min, 15430 Ansan-si (KR); PARK, Han Chul, 15430 Ansan-si (KR); KIM, Huihun, 15430 Ansan-si (KR); LEE, Doohee, 15430 Ansan-si (KR); KIM, Geon Ryong, 15430 Ansan-si (KR)
(74) Representative: V.O.

(57) **Abstract**

Disclosed are a film for cell pouch, that may minimize the winding tension applied to the metal layer and the film for the cell pouch, thereby minimizing the mechanical deformation of the metal layer, minimizing the deformation of a film laminate for cell pouch, and that may improve tensile strength and formability according to the improvement in the manufacturing process, and improving curl characteristics before and after molding, according to an improvement in the manufacturing process; a cell pouch including the same; and a method for manufacturing the said film for cell pouch.

## Description

### Technical Field

The present specification relates to a film for cell pouches with minimal deformation of laminate and a method for manufacturing the same.
[National Research and Development Project Supporting This Invention]
[Project Unique Number] 1415185612
[Project Number] 20022450
[Name of the Ministry] Ministry of Trade, Industry and Energy
[Name of the Project Management (Specialized) Institution] Korea Institute of Industrial Technology Evaluation and Management
[Research Project Name] Material/Parts Package Type (Top Company)
[Research Project Title] Development of Next-Generation Secondary Battery Pouch Capable for Realizing More Than Double High Adhesion Strength at 60°C
[Contribution Ratio] 1/1
[Name of the Research Performing Institution] Youlchon Chemical Co., Ltd.
[Research Period] 2023.01.01 ~ 2023.12.31

### Background Art

In general, a pouch-type battery used for electric vehicles or the like has an advantage in that it is easy to change its shape and has a high energy density as compared with a cylindrical shape or a square shape. Such cell pouch is generally prepared in the following sequence: a first process of surface-treating one side surface of the metal layer; a second process of surfaces-treating the other side surface of the metal layer; a third process of laminating the outer layer on one side; and a fourth process of laminating the sealant layer on the other side surface, and each process involving repeating the sequence of coating, drying, and winding and so on. However, in this case, improvement is required due to the increased probability of occurrence of running loss and process defects during the transfer of the raw material.

### Disclosure of Invention

### Technical Problem

In the exemplary embodiments of the present invention, in one aspect, it is intended to provide a film for a cell pouch capable of minimizing the winding tension applied to the metal layer and the film for the cell pouch according to an improvement in the manufacturing process, thereby minimizing the mechanical deformation of the metal layer, and minimizing the deformation of a film laminate for cell pouch, and a method for manufacturing the same.

In the exemplary embodiments of the present invention, in another aspect, it is intended to provide a film for cell pouch capable of improving tensile strength and formability according to the improvement in the manufacturing process, and improving curl characteristics before and after molding, and a method for manufacturing the same.

### Solution to Problem

In exemplary embodiments of the present invention, there is provided a film for cell pouch (a film for cell pouch according to claim 1), comprising: a sealant layer; an inner surface adhesive layer stacked on the said sealant layer; a barrier layer stacked on the said inner surface adhesive layer; an outer surface adhesive layer stacked on the said barrier layer; and an outer layer formed on the said outer surface adhesive layer; wherein the said film for cell pouch has a curl deviation of 3 mm or less as measured by the following methods.

### [Evaluation of Pre-molding Curl of Film for Cell Pouch]

A specimen of cell pouch film pouch is prepared into a square shape with a size of 15 cm×15 cm, and that specimen is placed on a flat fixing stand and fixed with a tape flatly.

Cut a 15 cm long X-shaped incision passing through the center point of the fixed specimen, then measure the height of the raised (curled) portions at two points on the MD (longitudinal) side and two points on the TD (transverse) side with the center point between them. Calculate the deviation from the difference between each MD measurement value and TD measurement value.

In exemplary embodiments, the said film for cell pouch (the film for cell pouch according to claim 1) may be the film for cell pouch (the film for cell pouch according to claim 2) having a post-molding curl deviation of 5 mm or less as measured by the following methods.

### [Evaluation of Post-molding Curl]

### ① MD Directional Molding (Evaluation of MD Molding Curl)

A molded specimen is prepared with 26.6 (MD) × 24.0 (TD) cm. The molding evaluation is conducted at 0.3 MPa using a one-cup molding machine coated with chromium (molding depth is 8 mm for AL40 µm application and 12 mm for an AL60 µm application). The R value (the radius value of corner curvature) of the molding machine is 4R (4 mm), the forming size during molding is 90 mm×160 mm in width, and is performed by single forming.

### (2) TD Directional Molding (Evaluation of TD Molding Curl)

A molded specimen is prepared with 26.6 (TD) × 24.0 (MD) cm. The molding evaluation is conducted at 0.3 MPa using a one-cup molding machine coated with chromium (molding depth is 8 mm for AL40 µm application and 12 mm for an AL60 µm application). The R value (the radius value of corner curvature) of the molding machine is 4R (4 mm), the forming size during molding is 90 mm×160 mm in width, and is performed by single forming.

In order to evaluate the curl generated after molding, a both-sided tape is installed on a flat place, and then the film for the molded cell pouch is fixed thereon to measure the height of the curl generated. A high value is recorded by measuring the measuring position 2 points. After measuring each corner of the molded sample, the height of the corner where the curl occurs larger is set as the curl value.

In exemplary embodiments, the said film for cell pouch (the film for cell pouch according to claim 1 or 2) may be the film for cell pouch (the film for cell pouch according to claim 3) in which the barrier layer is not wound alone during the manufacturing process, but is wound together with at least the outer layer.

In exemplary embodiments, the said film for cell pouch (the film for cell pouch according to any one of claims 1 to 3) may be the film for cell pouch (the film for cell pouch according to claim 4) to which winding is applied no more than twice during a manufacturing.

In exemplary embodiments, the said film for cell pouch (the film for cell pouch according to any one of claims 1 to 4) may be the film for cell pouch (the film for cell pouch according to claim 5) in which the barrier layer is a metal layer, and the metal of the said metal layer comprises one or more selected from the group consisting of aluminum or an alloy thereof, titanium or an alloy thereof, tungsten or an alloy thereof, molybdenum or an alloy thereof, copper or an alloy thereof, and stainless steel.

In exemplary embodiments, the said film for cell pouch (the film for cell pouch according to any one of claims 1 to 5) may be the film for cell pouch (the film for cell pouch according to claim 6) in which the outer layer comprises one or more resins selected from the group consisting of nylon resin, polyethylene terephthalate (PET), and polybutylene terephthalate (PBT) resin.

In exemplary embodiments, the said film for cell pouch (the film for cell pouch according to any one of claims 1 to 6) may be the film for cell pouch (the film for cell pouch according to claim 7) in which a surface treatment layer is formed on the barrier layer.

In exemplary embodiments, the said film for cell pouch (the film for cell pouch according to any one of claims 1 to 7) may be the film for cell pouch (the film for cell pouch according to claim 8) in which the said inner surface adhesive layer and the outer surface adhesive layer comprise one or more of an epoxy-based adhesive, a polyurethane-based adhesive, a phenol resin-based adhesive, a polyolefin-based adhesive, and a polyester-based adhesive.

In exemplary embodiments, the said film for cell pouch (the film for cell pouch according to any one of claims 1 to 8) may be the film for cell pouch (the film for cell pouch according to claim 9) in which the said inner surface adhesive layer is an adhesive coating layer; an extrusion coating layer; or an adhesive coating layer and extrusion coating layer.

In exemplary embodiments, the said film for cell pouch (the film for cell pouch according to any one of claims 1 to 9) may be the film for cell pouch (the film for cell pouch according to claim 10) in which the said sealant layer is a sealant film or an extruded resin layer.

In addition, in the exemplary embodiments of the present specification, there is provided a cell pouch comprising the said film for cell pouch (the film for cell pouch according to any one of claims 1 to 10), or a secondary battery (a secondary battery according to claim 11), in particular, a medium to large-sized secondary battery, packaged with that film for cell pouch (the film for cell pouch according to any one of claims 1 to 10).

In addition, in the exemplary embodiments of the present disclosure, there is provided a method (a method for manufacturing the film for cell pouch according to claim 12) for manufacturing the said film for cell pouch (the film for cell pouch according to any one of claims 1 to 10), the method comprising: a both-sided surface treatment step of surface-treating both-sided surfaces of the metal raw material contained in the barrier layer; an outer surface adhesive layer coating step of applying an adhesive to one side surface of the surface-treated metal raw material to form an outer surfaces adhesive layer; and an outer layer lamination step of laminating the outer layer raw material to the top of the outer surface adhesive layer; wherein the said film for cell pouch undergoes winding no more than twice during the manufacturing process, and the barrier layer in the said film for cell pouch is either wound together with the outer layer, or wound together with the outer layer and the sealant layer, without being wound alone during the manufacturing process.

In exemplary embodiments, the said method (the method for manufacturing the film for cell pouch according to claim 12) may be the method for manufacturing the film for cell pouch (the method for manufacturing the film for cell pouch according to claim 13): in which the said both-sided surface treatment step comprises sequentially performing surface treatment on the other side of the said metal raw material without the drying step, immediately after the surface treatment on the one side of the metal raw material; and/or in which the said both-sided surface treatment step comprises performing the first coating on one side of the metal raw material by applying the water-based and solvent-based coating solution using a combination of Direct coating and Reverse Kiss Coating (RKC) methods, and performing the second coating on the other one side of the metal raw material by applying a coating solution using RKC and Film up/down coating methods.

In exemplary embodiments, the said method (the method for manufacturing the film for cell pouch according to claim 12 or 13) may be the method for manufacturing the film for cell pouch (the method for manufacturing the film for cell pouch according to claim 14), further comprising a physical property stabilization drying step of drying the metal raw material having the said both-sided surfaces surface-treated in a floating manner to stabilize physical properties between the said both-sided surface treatment step and the outer surface adhesive layer coating step.

In exemplary embodiments, in the said method (the method for manufacturing the film for cell pouch according to any one of claims 12 to 14), the said method may be the method for manufacturing the film for cell pouch (the method for manufacturing the film for cell pouch according to claim 15), the method comprising: performing the first winding after the said outer layer lamination step; an inner surface adhesive layer coating step of forming an inner surface adhesive layer by applying adhesive on the other one side where the outer layer is not laminated in the surface-treated metal raw material after the said first winding; and laminating a sealant layer raw material to the bottom of the said inner surface adhesive layer; and performing the second winding after laminating the said sealant layer raw material.

### Advantageous Effects of Invention

The film for cell pouch of exemplary embodiments of the present invention may minimize the number of windings and winding tension through improvement of the manufacturing process to minimize mechanical deformation of the metal layer, thereby to minimize the deformation of the film laminate for cell pouch. In addition, adjusting the tension to a lower level is facilitated since the metal layer is not wound individually and the resin film with a lower elastic modulus than the metal layer is laminated and wound only once. In addition, according to the improvement of the manufacturing process, tensile strength and formability may be improved, and curl characteristics before and after molding may be improved.

### Brief Description of Drawings

The above and other aspects, features and advantages of the disclosed exemplary embodiments will be more apparent from the following detailed description taken in conjunction with the accompanying drawings in which:
Fig. 1 is a diagram schematically showing a cross-section of the film for cell pouch of exemplary embodiments of the present invention.
Fig. 2 is a schematic view of the apparatus for manufacturing the film for cell pouch of exemplary embodiments of the present invention.
Fig. 3 is a photograph showing the method of evaluating Curl before molding of the film for cell pouch in an experimental example of the present invention.
Fig. 4 is a photograph showing the method of evaluating Curl after molding in an experimental example of the present invention.
Fig. 5 is a graph schematically showing the winding tension (unit, N) according to the winding length (unit, m) of the embodiment and the comparative example in the experimental example of the present invention. Fig. 5A is a case of an example, and Fig. 5B is a case of a comparative example.

### [Description of Symbol]

1 raw material supply portion
2 foreign material removal means
3: first coater
4: second coater
5: physical property stabilization drying portion
6: cooling portion
7: third coater
8: adhesive drying portion
9: lamination portion
10: winding portion
100: outer layer
200: outer surface adhesive layer
300: barrier layer
310: surface treatment layer
320: metal layer
330: surface treatment layer
400: inner surface adhesive layer
500: sealant layer

### Mode for the Invention

Exemplary embodiments are described more fully hereinafter. The invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the description, details of features and techniques may be omitted to more clearly disclose exemplary embodiments.

### Term Definition

In this specification, the singular forms "a," "an," and "the" may include the plural forms, unless the context clearly dictates otherwise. In this application, the terms "comprise" or "have" and the like are intended to designate the presence of a feature, number, step, operation, component, part, or combination thereof described in the specification, and do not preclude the presence or addition possibility of one or more other features or numbers, steps, operations, components, parts, or combinations thereof.

In the present specification, expressions such as first and second are used to refer to configurations separately from each other, rather than to a specific order, unless otherwise stated.

In the present specification, the term "cell" means a battery, and it is the broadest meaning including all of various batteries such as a secondary battery such as a lithium-ion battery and a lithium-polymer battery, or a portable storage battery.

In the present specification, a "cell pouch" or a " cell pouch film" is one in which cell components such as a positive electrode, a negative electrode, and a separator are impregnated and housed in the electrolyte, and is the broadest meaning including all those in which a film having a stacked structure in consideration of gas barrier properties, bending properties, electrolyte resistance, thermal adhesion, and so on is processed into a bag shape, a box shape, or the like to house the said cell components.

In the present specification, the final structure means the final layer structure of the film for cell pouch. This final structure may differ slightly depending on the various preparing process types.

For example, the final structure may consist of an outer cover substrate (or an outer layer), a first adhesive layer, an outer surface-treated layer, a reference substrate (or a barrier layer), an inner surface-treated layer, a second adhesive layer and an inner cover substrate (or a sealant layer). Alternatively, the final structure may consist of an outer cover substrate (or an outer layer), a first adhesive layer, an outer surface-treated layer, a reference substrate (or a barrier layer), an inner surface-treated layer, an extrusion coating layer, and an inner cover substrate (or a sealant layer). Alternatively, the final structure may consist of an outer cover substrate (or an outer layer), a first adhesive layer, an outer surface-treated layer, a reference substrate (or a barrier layer), an inner surface-treated layer, a second adhesive layer, an extrusion coating layer, and an inner cover substrate (or a sealant layer).

In the present specification, the intermediate structure is a structure formed in the middle of the preparing process of the film for cell pouch, and various cell pouch intermediate structures may occur depending on the preparing process.

For example, there may be a first intermediate structure consisting of an outer cover substrate (or an outer layer), a first adhesive layer (or an outer surface adhesive layer), an outer surface-treated layer, a reference substrate (or a barrier layer), the inner surface-treated layer, and a second adhesive layer (or an inner adhesive layer). Alternatively, there may be a second intermediate structure consisting of an outer cover substrate (or an outer layer), a first adhesive layer (or an outer surface adhesive layer), an outer surface-treated layer, a reference substrate (or a barrier layer), and an inner surface-treated layer.

In the present specification, one in-line process means a roll-to-roll process in which the raw material performs a single run between an unwinder and a rewinder (winding roll).

In the present specification, winding (rewinding) once does not mean that the winding roll rotates only once (the winding roll can, of course, rotate multiple times), and it means that the film completes its first run by being wound around the winding roll. Therefore, the second winding (rewinding) means completing the first run during the preparing process, and then starting the run again, and completing the second run.

In the present specification, a raw material may mean a barrier layer or a metal layer material provided in the preparing process.

In the present specification, a functional raw material may mean a resin raw material forming a sealant layer and/or an outer layer.

### Description of Exemplary Embodiments

Exemplary embodiments of the present invention are described below.

In general, the prior art comprises the steps of: i) coating and drying the surface-treated layer on one side of the metal layer, followed by the first winding step to coat and dry another surface-treated layer on the other one side of the said metal layer, and winding it again secondarily; ii) forming an outer surface adhesive layer on the one side of the said surface-treated metal layer, and laminating and drying the outer layer, and then winding it thirdly; and iii) forming an inner surface adhesive layer on other one side of the said surface-treated metal layer, and laminating and drying the sealant layer. When several processes are repeated in this way, the probability of occurrence of running loss and process defects may increase. In addition, the film manufactured according to the prior art comprises at least three winding steps up to the lamination step of the sealant layer, so there is a very high possibility that the metal (aluminum, etc.) used in the barrier layer will be deformed due to the winding tension. Moreover, since metals have a high elastic modulus, winding itself is difficult to wind up by lowering the winding tension (for example, aluminum has a Young's modulus of elasticity of 69 to 86). And because metal has low resilience, there are limits to recovery once it is deformed. Therefore, if the process of applying deformation to the metal is repeated several times, deformation due to tension occurs, resulting in a decrease in the physical properties of the film for the final cell pouch.

Therefore, in the exemplary embodiments of the present invention, the conventional film for cell pouch may be manufactured according to a 1Pass 3 Coating (1P3C) method in which three or more coating processes may be performed in one in-line process by one run of the raw material, rather than repeating the order of coating, drying, and winding for each layer stacking process, thereby solving the problems of the prior art as above and minimizing the mechanical deformation of the metal layer, thereby minimizing the deformation of a final film laminate for cell patch.

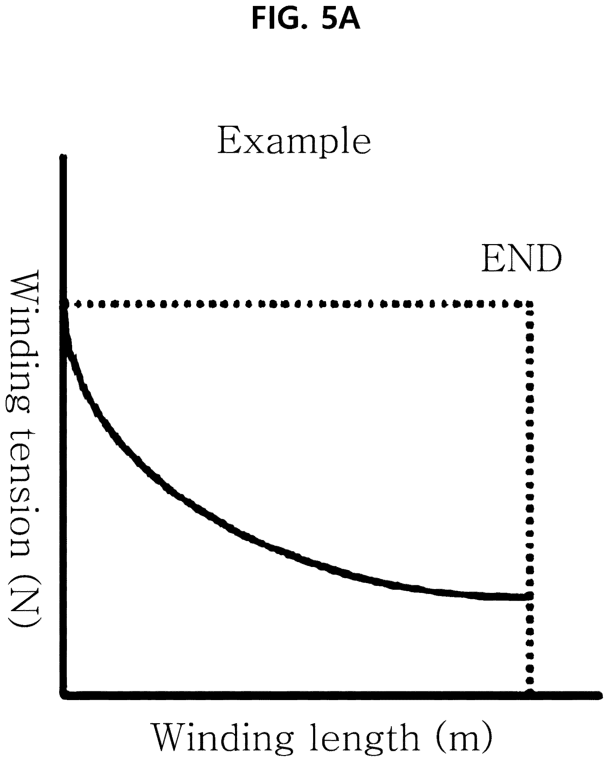

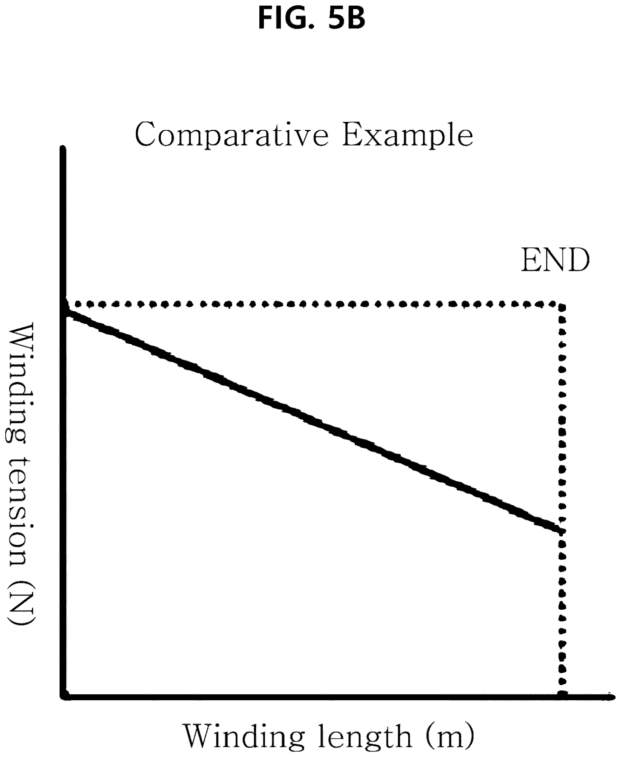

In addition, adjusting the tension to a lower level is facilitated since the metal layer is not wound individually and the resin film with a lower elastic modulus than the metal layer is laminated and wound only once. Fig. 5 shows that it is easier to adjust the tension when the metal layer and the resin film are laminated and wound (Fig. 5A) compared to the comparative example in which the metal layers are individually wound (Fig. 5B).

Accordingly, it is possible to improve the pre-molding curl characteristics and the post-molding curl characteristics of the film for cell pouch. In relation to this, the deep molding of the film for cell pouch is an essential characteristic for medium to large-sized battery, but the so-called curl phenomenon, in which the ends of the film for cell pouch are rolled up after molding, can occur very seriously due to the high formability. This curl phenomenon may reduce the efficiency of the process for manufacturing the secondary battery. In particular, the cell manufacturing process involves an automated continuous process, in which an air injector is frequently used, and during this process, the curled portion is further rolled up toward the air injector, leading to a further deterioration in process efficiency. Therefore, it is not easy to improve Curl characteristics, but in exemplary embodiments of the present invention, by improving the manufacturing process may minimize deformation of the laminate, thus improving the curl characteristics before and after molding.

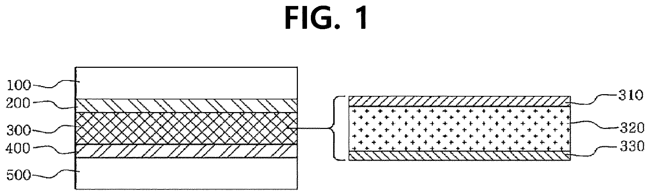

Referring to Fig. 1, in the exemplary embodiments of the present invention, the film for cell pouch comprises: a sealant layer 500; an inner surface adhesive layer 400 stacked on the said sealant layer 500; a barrier layer 300 stacked on the said inner surface adhesive layer 400; an outer surface adhesive layer 200 stacked on the said barrier layer 300; and an outer layer 100 formed on the said outer surface adhesive layer 200, the said film for cell pouch undergoing winding process no more than twice, and the said barrier layer 300 being either wound together with at least the outer layer, or wound together with the outer layer and the sealant layer, without being wound alone.

In exemplary embodiments, the said film for cell pouch has a Curl [pre-molding Curl] deviation of 3 mm or less as measured by the following method.

### [Evaluation of Pre-molding Curl of Film for Cell Pouch]

A specimen of the film for cell pouch is prepared into a square shape with a size of 15 cm×15 cm, and that specimen is placed on a flat fixing stand and fixed with a tape flatly.

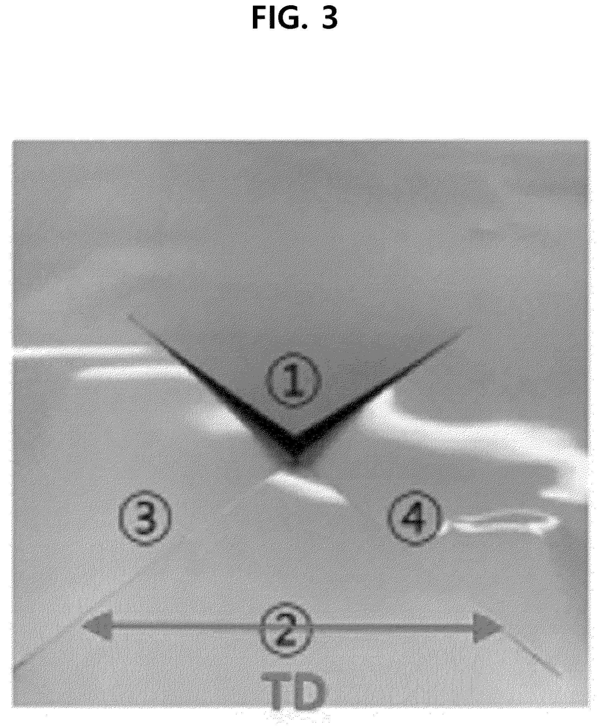

Cut a 15 cm long X-shaped incision passing through the center point of the fixed specimen, then measure the height of the raised (curled) portions at two points on the MD (longitudinal) side and two points on the TD (transverse) side with the center point between them (see Fig. 3). Calculate the deviation from the difference between each MD measurement value and TD measurement value.

In a non-limiting example, the said pre-molding Curl deviation may be 3 mm or less, 2.9 mm or less, 2.8 mm or less, 2.7 mm or less, 2.6 mm or less, 2.5 mm or less, 2.4 mm or less, 2.3 mm or less, 2.2 mm or less, 2.1 mm or less, 2.0 mm or less, 1.9 mm or less, 1.8 mm or less, 1.7 mm or less, 1.6 mm or less, 1.5 mm or less, 1.4 mm or less, 1.3 mm or less, 1.2 mm or less, 1.1 mm or less, 1.0 mm or less, 0.9 mm or less, 0.8 mm or less, 0.7 mm or less, 0.6 mm or less, 0.5 mm or less, 0.4 mm or less, 0.3 mm or less, 0.2 mm or less, 0.1 mm or less, or 0 mm.

In exemplary embodiments, the said film for cell pouch has a post-molding Curl deviation of 5 mm or less as measured by the following method.

### [Evaluation of Post-molding Curl]

### ① MD Directional Molding (Evaluation of MD Molding Curl)

A molded specimen is prepared with 26.6 (MD) × 24.0 (TD) cm. The molding evaluation is conducted at 0.3 MPa using a one-cup molding machine coated with chromium (molding depth is 8 mm for AL40 µm application and 12 mm for an AL60 µm application). The R value (the radius value of corner curvature) of the molding machine is 4R (4 mm), the forming size during molding is 90 mm×160 mm in width, and is performed by single forming.

### (2) TD Directional Molding (Evaluation of TD Molding Curl)

A molded specimen is prepared with 26.6 (TD) × 24.0 (MD) cm. The molding evaluation is conducted at 0.3 MPa using a one-cup molding machine coated with chromium (molding depth is 8 mm for AL40 µm application and 12 mm for an AL60 µm application). The R value (the radius value of corner curvature) of the molding machine is 4R (4 mm), the forming size during molding is 90 mm×160 mm in width, and is performed by single forming.

In order to evaluate the curl generated after molding, a both-sided tape is installed on a flat place, and then the film for the molded cell pouch is fixed thereon to measure the height of the curl generated. A high value is recorded by measuring the measuring position 2 points. After measuring each corner of the molded sample, the height of the corner where the curl occurs larger is set as the curl value.

In a non-limiting example, the said post-molding Curl deviation may be 5 mm or less, 4.9 mm or less, 4.8 mm or less, 4.7 mm or less, 4.6 mm or less, 4.5 mm or less, 4.4 mm or less, 4.3 mm or less, 4.2 mm or less, 4.1 mm or less, 4.0 mm or less, 3.9 mm or less, 3.8 mm or less, 3.7 mm or less, 3.6 mm or less, 3.5 mm or less, 3.4 mm or less, 3.3 mm or less, 3.2 mm or less, 3.1 mm or less, 3.0 mm or less, 2.9 mm or less, 2.8 mm or less, 2.7 mm or less, 2.6 mm or less, 2.5 mm or less, 2.4 mm or less, 2.3 mm or less, 2.2 mm or less, 2.1 mm or less, 2.0 mm or less, 1.9 mm or less, 1.8 mm or less, 1.7 mm or less, 1.6 mm or less, 1.5 mm or less, 1.4 mm or less, 1.3 mm or less, 1.2 mm or less, 1.1 mm or less, 1.0 mm or less, 0.9 mm or less, 0.8 mm or less, 0.7 mm or less, 0.6 mm or less, 0.5 mm or less, 0.4 mm or less, 0.3 mm or less, 0.2 mm or less, 0.1 mm or less, or 0 mm.

The material and thickness of each layer in the said film in the exemplary embodiments of the present invention is not limited as long as it can be prepared as the film for cell pouch, but may include, for example, the following configuration.

The said barrier layer is a layer having performance of blocking water vapor or air from outside the battery, gas generated inside the battery, and/or moisture.

In exemplary embodiments of the present invention, the barrier layer may include a metal layer or a surface-treated layer uniformly coated on both-sided surfaces of the said metal layer, respectively, and the said metal layer may be a metal thin film or a metal deposition layer. Examples of the said metal thin film include a metal foil. The said metal deposition layer may be formed by vacuum deposition of metal on a separate plastic film, for example, a film of polyethylene terephthalate (PET), polyethylene (PE), polypropylene (PP), or the like.

As an embodiment, the metal of the said metal layer is not limited as long as it has the above-described blocking performance, and examples thereof include one or more selected from the group consisting of aluminum (Al), iron (Fe), copper (Cu), nickel (Ni), tin (Sn), zinc (Zn), indium (In), and tungsten (W), or two or more alloys selected therefrom. Specifically, the said metal may include one or more selected from the group consisting of aluminum or an alloy thereof, titanium or an alloy thereof, tungsten or an alloy thereof, molybdenum or an alloy thereof, copper or an alloy thereof and stainless steel. More specifically, it may include aluminum. As an example, the said surface-treated layer may be a surface-treated layer made of phosphoric acid, chromium, zirconium, cerium, lanthanum, scandium, yttrium, or the like to provide corrosion resistance of a metal.

As one embodiment, the said barrier layer may have a thickness of 20 µm to 80 µm. When the thickness of the said barrier layer is less than 20 µm, pinholes, fine cracks, and the like may occur in a process such as molding, making it difficult to ensure safety, and when the thickness or the said barrier layer is more than 80 µm, the energy density may be lowered in the production of a battery.

The said outer layer is a layer having heat resistance, wear resistance, chemical resistance, and the like in order to protect the said barrier layer.

In exemplary embodiments of the present invention, the said outer layer may comprise one or more resin selected from the group consisting of one or more resins selected from nylon resin, polyethylene terephthalate (PET), polybutylene terephthalate (PBT), and the like. More specifically, it may comprise a stretched nylon. In one example, the said outer layer may have a thickness of 5 µm to 40 µm. The said outer layer may be composed of a plurality of layers.

The said sealant layer is the inner layer in which the cell is embedded and then adhered by heat to impart sealing properties.

In exemplary embodiments of the present invention, the said sealant layer may include a thermal adhesive resin, that is, a sealing resin for thermal adhesive. Specifically, the said sealant layer may include one or more selected from the group consisting of polyolefin-based materials such as polypropylene (PP), polyethylene (PE) based materials, copolymers, terpolymers or derivatives thereof, and ethylene vinyl acetate (EVA). The said co-polymer or ter-polymer may include an ethylene/propylene copolymer or a terpolymer of ethylene/propylene/butadiene. As an example, the said sealant layer may have a thickness of 20 µm to 100 µm. The said sealant layer may be composed of a plurality of layers.

The said outer surface adhesive layer is an adhesive layer for bonding the barrier layer and the outer layer.

In exemplary embodiments of the present invention, the said outer surface adhesive layer may comprise one or more of an epoxy-based adhesive, a polyurethane-based adhesive, a phenolic resin-based adhesive, a polyolefin-based adhesive, and a polyester-based adhesive. As an example, the said outer surface adhesive layer may have a thickness of 0.5 µm to 10 µm.

In exemplary embodiments of the present invention, the said inner surface adhesive layer may be an adhesive layer or an extruded resin layer for adhesion of the barrier layer and the sealant layer. Alternatively, as another embodiment, the said inner surface adhesive layer may be one in which an extruded resin layer is further formed between the inner layer adhesive layer and the sealant layer.

The said inner surface adhesive layer may include one or more of an epoxy-based adhesive, a polyurethane-based adhesive, a phenolic resin-based adhesive, a polyolefin-based filler, and a polyester-based adhesive. As one example, the said inner surface adhesive layer may have a thickness of 0.5 µm to 10 µm. As one example, the said extruded resin layer may improve the bending property, adhesiveness, insulation property, and the like of the pouch. As one example, the said extruded resin layer may comprise an olefin-based resin such as a polypropylene-based resin. As one example, the said extruded resin layer may have a thickness of about 5 to 80 µm.

The said film for cell pouch according to the exemplary embodiments of the present invention not only has excellent in gas barrier property, bending property, electrolyte resistance, thermal adhesiveness, and the like, but also has good curl characteristics before and after molding by improving problems such as deformation of the metal layer and deformation of the laminate due to multiple windings, which were problems in the conventional manufacturing method.

On the other hand, in exemplary embodiments of the present invention, it is possible to provide a cell pouch, or a secondary battery, in particular, a medium to large-sized secondary battery, packaged with that film for cell pouch, comprising the film for cell pouch described above.

On the other hand, in the exemplary embodiments of the present invention, it is possible to provide a method for manufacturing the film for cell pouch as described above, the method comprising: a both-sided surface treatment step of surface-treating both-sided surfaces of the metal raw material contained in the barrier layer; an outer surface adhesive layer coating step of applying an adhesive to one side surface of the surface-treated metal raw material to form an outer surfaces adhesive layer; and an outer layer lamination step of laminating the outer layer raw material to the top of the outer surface adhesive layer; wherein the said film for cell pouch undergoes winding no more than twice during the manufacturing process, and the barrier layer in the said film for cell pouch is either wound together with the outer layer, or wound together with the outer layer and the sealant layer, without being wound alone during the manufacturing process.

In one embodiment, the said both-sided surface treatment step may include sequentially performing surface treatment on the other side of the said metal raw material without a drying step, immediately after the surface treatment on one side of the metal raw material. In this case, the said both-sided surface treatment step may be performed by a both-sided double coating means comprising a first coater and a second coater.

In one embodiment, the said both-sided surface treatment step may comprise: performing a first coating on one side of the metal raw material by applying the water-based and solvent-based coating solution using a combination of direct coating and reverse kiss coating (RKC) methods, and performing a second coating on the other one side of the metal raw material by applying a coating solution using RKC and Film up/down coating methods.

Specifically, the said first coating is performed by applying the water-based and solvent-based coating solution using a combination of direct coating and reverse kiss coating (RKC) methods by a first coater, so that the physical properties and changes of the coating solution may be considered. The other side surface of the metal raw material may be subjected to a secondary coating to apply the coating liquid using RKC and film up/down coating methods. On the other hand, by configuring the substrate contact surface forming the outer layer and the positions of the coating roll and the doctor to be adjustable, it is possible to improve the uniformity of coating and operation speed. More specifically, by configuring a chamber method (sealing pipe) for precise control of the said coating agent, it is possible to adjust the viscosity of the coating agent and effectively prevent the inflow of foreign material.

In one embodiment, the said both-sided surface treatment step may comprise, more specifically, the following processes: a raw material supply process of unwinding the wound metal sheet for supply the raw material; a foreign material removal process of removing foreign material present on the surface of the supplied metal sheet; a tension adjustment process of adjusting the tension of the metal sheet after the foreign material on the surface have been removed; and a both-sided double coating process of performing coating on both sides of the metal raw material while maintaining a constant tension.

In one embodiment, the said foreign material removal process may comprise a first foreign material removal process of performing discharge treatment on both-sided surfaces of the metal raw material to remove oil. In addition, the said foreign matter removal process may further comprise a pinhole inspection process of confirming whether pinholes are generated on both-sided surfaces of the metal raw material from which the oil has been removed. In addition, the said foreign material removal process may further comprise a second foreign material removal process of removing foreign material generated on both-sided surfaces of the metal raw material subjected to the said pinhole inspection process by a roll manner.

In addition, the said method according to one embodiment may further comprise a physical property stabilization drying step of drying the said metal raw material having both-sided surfaces surface-treated in a floating manner to stabilize physical properties between the both-sided surface treatment step and the outer surface adhesive layer coating step. In accordance with the said floating manner, both-sided surfaces of the surface-treated metal raw material may be dried simultaneously, minimizing contact between the guide roll and the raw material, so that issues such as occurrence of poor running performance of the appearance due to foreign matter transfer by the guide roller and cutting of the raw material may be significantly reduced.

In one embodiment, in the said method, an air floating manner may be applied to dry the surface-treated raw material in a non-contact manner while floating, in the physical property stabilization drying step of drying the metal raw material having both-sided surfaces surface-treated as above in a floating manner to stabilize physical property. As a result, it is possible to dry the both-sided coated metal raw material while minimizing contact with the components such as a transfer roll. Then, it may further comprise a cooling step of cooling the dried metal raw material, and a surface inspection step of inspecting the surface of the cooled metal raw material.

In one embodiment, the step of coating the outer surface adhesive layer by applying an adhesive to one side of the said surface-treated metal raw material to form the outer side adhesive layer, respectively, is a process of applying the adhesive to the one side of the surface-treated metal raw material through coating twice, and may be performed by a third coater, and is prepared for laminating through a process such as drying. After applying the adhesive, the metal raw material applied with the adhesive is dried to form an adhesive layer, and then the thickness of the dried adhesive layer is measured, and the surface of the adhesive layer may be subjected to corona treatment to strengthen the adhesive force.

In one embodiment, the said method may further comprise, after the said laminating step, an inner surface adhesive layer coating step of forming an inner surface adhesive layer by applying the inner adhesive on the other one side where the outer layer is not laminated in the said metal raw material. In addition, in one embodiment, it may further comprise a drying step after the said coating step. In one embodiment, it may further comprise laminating the sealant layer raw material to the bottom of the said inner surface adhesive layer.

In one embodiment, the said method may comprise up to a total of two winding steps until the final structure of the cell pouch is prepared, to prevent cutting and/or pressing on the raw material used in each step up to the outer layer laminating step.

Specifically, it is most preferable to prepare the final structure of the cell pouch film by winding twice or less in total, and more preferably once in total.

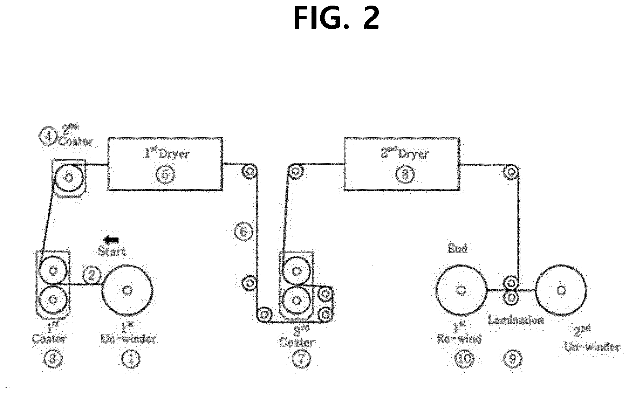

In one embodiment, the said winding step may be performed after the said outer layer lamination step. Alternatively, it may be performed after the said sealant layer lamination step. For example, the said winding step may be performed in step 10 of Fig. 2.

In one embodiment, the laminating the outer layer raw material to the top of the said outer surface adhesive layer, and the laminating of the sealant layer raw material to the bottom of the said inner surface adhesive layers are respectively a process of laminating a functional raw material to one side of the metal raw material applied with the adhesive, and the inner side may be primarily laminated with the sealant layer raw material to stabilize the heat resistance and cold resistance of the battery, while the outer side may be laminated with the outer layer raw material for heat resistance, pinhole resistance, wear resistance, and so on. In one embodiment, each of the lamination steps may be laminating the pre-prepared outer layer raw material or sealant raw material.

In one embodiment, between the said third coating step and the lamination step, it may further comprise: an adhesive drying step of drying the metal raw material applied with the adhesive to form the adhesive layer; an adhesive layer thickness measurement step of measuring the thickness of the dried adhesive layer; and surface treatment step for the adhesive layer of corona treating the surface of the said adhesive layer to strengthen the adhesive force.

In one embodiment, it may further comprise a surface inspection step of inspecting the surfaces of the said sealant layer and outer layer after the said lamination step.

In one embodiment, in order to minimize the occurrence of foreign material and scratches in the process of transferring each raw material, both a tendency structure that operates by separating the substrate contact roll and the axis, and a shaft structure that moves in one piece may be applied to the guide roll. The general driving method of the guide roll involves transmitting the rotation from the motor to the axial-integrated guide roll, driving it at a 1:1 speed ratio, while the tendency driving method has a structure that separates the guide roll and axial to mutually compensate for the rotational speed of the fine rolls, and may be applied to necessary sections. As one example, a Re-winder portion and an Un-winder portion (a raw material supply portion) may be separately configured so that they may be operated separately when a problem occurs in facility operation.

In addition, in one embodiment, a suction roll may be applied to the tension control section to minimize the generation of foreign material and scratches during the transfer of the raw material, and a contact-type clean roll for removing foreign material may be applied to prevent foreign material generated during the running from sticking to the roll and causing poor appearance (such as cutting and scratching).

Meanwhile, exemplary embodiments of the present invention may further comprise an aging step. The aging step is a process necessary to improve reliability such as adhesion, electrolyte resistance, and peel strength during preparation of the film for cell pouch, but an optimum aging process due to a somewhat long required time is important. From the viewpoint of productivity, it is preferable to prepare a product through only one aging step for the final structure of the film for said cell pouch. Specifically, the said method may comprise up to two aging steps. More specifically, the said method may comprise applying an adhesive to one side of the surface-treated metal raw material without an aging step after the said both-sided surface treatment step, and the said aging step may be included after the lamination step of the outer layer and/or the sealant layer. For example, when the aging step is included in the both-sided surface treatment step before the said lamination step, the unlaminated surface treatment agent may be detached while the film in the preparing intermediate step is exposed to air for a certain period of time. For example, when the aging step is included in the adhesive layer formation step, the reaction of the adhesive layers may proceed in part, resulting in a blocking phenomenon in which the adhesive layer adheres to another layer.

Meanwhile, exemplary embodiments of the present invention provide a film manufacturing apparatus for the said cell pouch, comprising: a both-sided surface treatment means comprising a first coater 3 and a second coater 4 for surface-treating both-sided surfaces of a metal raw material forming the barrier layer; a third coater 7 for applying an adhesive to one side surface of the said surface-treated metal raw material; and a laminating portion 9 for laminating a functional raw material on one side of the said adhesive layer. Fig. 2 is a schematic view of a film manufacturing apparatus for the cell pouch according to one example of the present disclosure.

In one embodiment, the said both-sided surface treatment means may comprise a raw material supply portion 1, a foreign material removal means 2, a tension control portion, and the first coater 3 and the second coater 4. The said raw material supply portion 1 supplies raw material by unwinding the wound metal raw material. The said foreign matter removal means 2 removes the foreign material present on the surface of the supplied metal raw material. The said tension control portion adjusts the tension of the metal raw material from which foreign material has been removed on the surface. The first coater 3 and the second coater 4 perform coating on both sides of the metal raw material while maintaining a constant tension.

In one embodiment, the said foreign material removal means 2 may comprise the first foreign material removal portion that performs discharge treatment on both-sided surfaces of the metal raw material to remove oil. In addition, it may further comprise the pinhole inspection portion that confirms whether pinholes are generated on both-sided surfaces of the metal raw material from which the oil has been removed. When there is no abnormality in the confirmation result, it may further comprise the second foreign material removal portion that removes foreign material generated on both-sided surfaces of the metal raw material in a roll manner.

In one embodiment, the physical property stabilization drying portion 5 may be formed between the said both-sided surface treatment means and the third coater 7 to stabilize physical properties by drying the metal raw material coating-treated on both-sided surfaces in a floating manner. In this case, the air floating manner may be applied to dry the coated substrate in the non-contact manner while floating. As a result, it is possible to dry the both-sided coated metal raw material while minimizing contact with the components such as a transfer roll. Then, the metal raw material dried by the cooling portion 6 may be cooled, and the surface of the cooled metal raw material may be inspected by the surface inspection portion.

In one embodiment, between the said third coater 7 and the lamination portion 9, it may further comprise: an adhesive drying portion 8 for drying the metal raw material applied with the adhesive to form an adhesive layer; an adhesive layer measuring portion for measuring the thickness of the dried adhesive layer, and an adhesion layer surface treatment portion for treating the surface of the adhesive layer with a corona treatment to strengthen the adhesive force.

In one embodiment, it may further comprise the lamination portion 9, followed by the surface inspection portion for inspecting the surfaces of the sealant layer and the outer layer.

According to one embodiment, the film for the cell pouch may be prepared using the manufacturing apparatus of Fig. 2. In one example, a fourth coater (not shown) applying the adhesive to the other side of the surface-treated metal raw material, a drying portion (not shown), a functional raw material (outer layer, sealant layer) lamination portion (not shown), an extrusion portion (including co-extrusion) (not shown), and the like may be added between the lamination portion 9 and the final winding portion (End, 2nd Re-wind) of Fig. 2 as necessary.

Hereinafter, the present disclosure will be described in more detail through examples. These examples are intended to illustrate the disclosure only, and it will be apparent to those skilled in the art that the scope of the disclosure is not to be construed as being limited by these examples.

### [Experiment]

### Example

Examples of this experiment are prepared according to the following method.

One side of the aluminum foil metal raw material forming the barrier layer is coated and surface-treated, and then the other side surface of the said metal raw material is coated and surface-treated. The said metal raw material coated on both-sided surfaces is dried in a floating manner to stabilize the physical property. The said dried metal raw material is cooled, and a urethane-based adhesive is applied to one side of the said surface-treated metal raw material by the third coater to form an outer surface adhesive layer. Next, the PET/nylon film prepared in advance is laminated onto the said outer surface adhesive layer to form an outer layer. A urethane-based adhesive is also applied to the other side of the said surface-treated metal raw material, and a cast polypropylene film is laminated to them, to form a sealant layer, thereby preparing a film for cell pouch. The specifications of each of Examples 1 and 2 are described in Table 1 below.

### Comparative Example

The films for cell pouches of the comparative examples are prepared as follows.

First, one side of the aluminum foil metal raw material forming the barrier layer is coated and dried, and then subjected to a first winding step, and another surface treatment layer is coated and dried on the other one side surface of the said metal raw material, which is then subjected to a second winding step. After coating and drying the urethane-based adhesive layer on one side of the said surface-treated metal layer, the PET/nylon film prepared in advance is laminated to them, to form an outer layer, which is then subjected to a third winding step. The inner surface adhesive layer is formed on the other one side surface of the said surface-treated metal layer and dried them, subsequently a cast polypropylene film is laminated to them, to prepare a film for cell pouch. The specifications of Comparative Examples 1 and 2 are described in Table 1 below.

For the above-prepared examples and comparative examples, tensile strength, molding depth, and pre-molding Curl evaluation of the cell pouch film and post-molding Curl evaluation are performed, respectively. The results are shown together in Table 1.

### Evaluation of Tensile Strength of Film

The tensile strength of the first prepared film for cell pouch is evaluated. More specifically, the film is cut using a specimen cutter to prepare a specimen of 130 mm×15 mm in the longitudinal direction (MD) and the width direction (TD). For the prepared specimens, the tensile strength is measured using a UTM (manufacturer: INSTRON) universal testing machine in accordance with ASTM D638 under the conditions of a stretching speed of 50 mm/min and a distance between grips of 50 mm.

### Evaluation of Formability of Film

Cell pouch film specimens of 266 mm (TD)×240 mm (MD) are collected in the longitudinal direction MD and the width direction TD. The collected specimens are molded into a rectangular shape (a horizontal length of 90 mm and a vertical length of 160 mm). (the evaluation of formability is performed at 1 cup in high-molding pouch formability evaluation equipment coated with chromium, and the R value may vary but the reference edge R value is 4.)

When measuring the depth after molding, a deeper depth is applied if all 10 out of 10 are not broken at that depth, and when at least one break occurs, the depth just before that is defined as the maximum height in terms of formability.

### Evaluation of Pre-Molding Curl of Film for Cell Pouch

As shown in Fig. 3, a film specimen for cell pouch is prepared in a rectangular shape with a size of 15 cm×15 cm, and that specimen is placed on a flat fixing table and fixed with a tape flatly. X-shaped cutting is performed 15 cm long so as to pass through the center point of the fixed specimen, and the heights raised (Curled) at two points on the MD (longitudinal) side and the TD (transverse) side are measured with the center points therebetween. The deviation is determined by the difference between each MD measurement value and the TD measurement value.

### Evaluation of Post-Molding Curl of Film for Cell Pouch

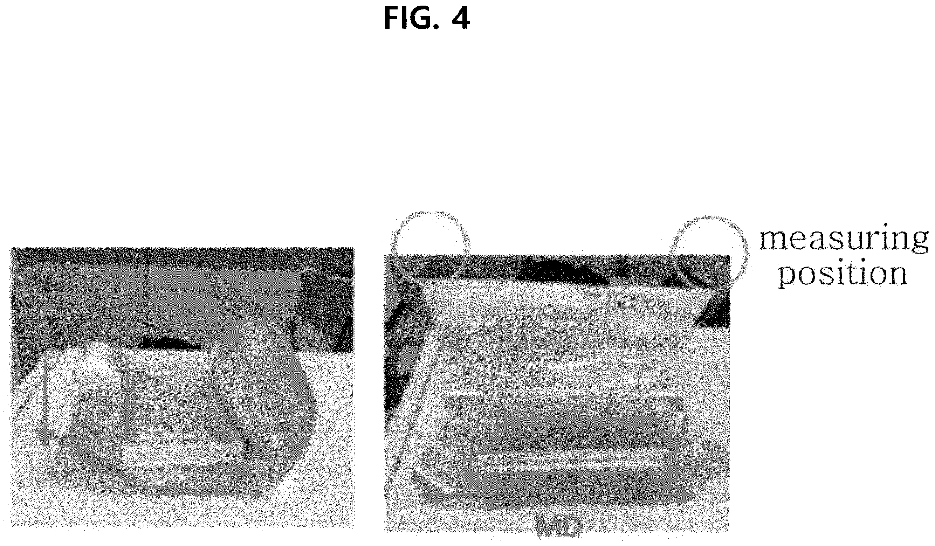

As shown in Fig. 4, the film for cell pouch is molded with the MD direction (266 mm (MD) × 240 mm(TD)) and the TD direction (266 mm (TD) × 240 mm(MD)) to prepare a specimen.

The molding evaluation is conducted at 0.3 MPa using a one-cup molding machine coated with chromium. The molding depth is 8 mm for AL40 µm application and 12 mm for an AL60 µm application.

The R value (the radius value of corner curvature) of the molding machine is 4R (4 mm). The forming size during molding is 90 mm×160 mm in width, and is performed by single forming.

In order to evaluate the curl generated after molding, a both-sided tape is installed on a flat place, and then the molded pouch is fixed thereon to measure the height of the curl generated. A high value is recorded by measuring the measuring position 2 points. After measuring each corner of the molded sample, the height of the corner where the curl occurs larger is set as the curl value.

**[TABLE 1]**

| | metal | sealant | tensile strength [N/15mm] | molding depth [mm] | pre-molding Curl evaluation[mm] | | post-molding Curl evaluation [mm] | |
|---|---|---|---|---|---|---|---|---|
| | AI | PP | | | MD | TD | MD directional molding | TD directional molding |
| Comp.Ex.1 | 40µm | 80µm | 152.0 | 12mm | 12.5 | 16.3 | 12.5 | 18.0 |
| Ex.1 | 40µm | 80µm | 168.1 | 15mm | 7.5 | 9 | 5.2 | 7.5 |
| Comp.Ex.2 | 60µm | 80µm | 216.5 | 16mm | 14.5 | 20.5 | 35.5 | 48.5 |
| Ex.2 | 60µm | 80µm | 225.9 | 18mm | 11.5 | 13.2 | 18.5 | 21.0 |

As described above, it can be seen that in the case of the examples, compared to the comparative examples, the tensile strength and formability are excellent, as well as the pre-molding curl characteristics and the post-molding curl characteristics are excellent.

## Claims

1. A film for cell pouch, comprising:
a sealant layer;
an inner surface adhesive layer stacked on the sealant layer;
a barrier layer stacked on the inner surface adhesive layer;
an outer surface adhesive layer stacked on the barrier layer; and
an outer layer formed on the outer surface adhesive layer;
wherein, a pre-molding curl deviation is 3 mm or less as measured by a method of Evaluation of Pre-molding Curl of Film for Cell Pouch, wherein in said method of Evaluation of Pre-molding Curl of Film for Cell Pouch
a specimen of cell pouch film pouch is prepared into a square shape with a size of 15 cm×15 cm, and that specimen is placed on a flat fixing stand and fixed with a tape flatly,
a 15 cm long X-shaped incision is cut passing through the center point of the fixed specimen, then measure the height of the raised (curled) portions at two points on the MD (longitudinal) side and two points on the TD (transverse) side with the center point between them and the deviation is calculated from the difference between each MD measurement value and TD measurement value.

2. The film for cell pouch according to claim 1, wherein the film for cell pouch has a post-molding curl deviation of 5 mm or less as measured by a method of Evaluation of Post-molding Curl, wherein said method of Evaluation of Post-molding Curl comprises
- MD Directional Molding (Evaluation of MD Molding Curl), wherein a molded specimen is prepared with 26.6 (MD) × 24.0 (TD) cm, the molding evaluation is conducted at 0.3 MPa using a one-cup molding machine coated with chromium (Cr) and the R value (the radius value of corner curvature) of the molding machine is 4R (4 mm), the forming size during molding is 90 mm×160 mm in width, and is performed by single forming;
- TD Directional Molding (Evaluation of TD Molding Curl), wherein a molded specimen is prepared with 26.6 (TD) × 24.0 (MD) cm, the molding evaluation is conducted at 0.3 MPa using a one-cup molding machine coated with chromium (Cr)and the R value (the radius value of corner curvature) of the molding machine is 4R (4 mm), the forming size during molding is 90 mm×160 mm in width, and is performed by single forming;
- in order to evaluate the curl generated after molding, a both-sided tape is installed on a flat place, and then the film for the molded cell pouch is fixed thereon to measure the height of the curl generated and a high value is recorded by measuring the measurement position 2 points; after measuring each corner of the molded sample, the height of the corner where the curl occurs larger is set as the curl value.

3. The film for cell pouch according to claim 1 or 2, wherein the barrier layer in the film for cell pouch is not wound alone during the manufacturing process, but is wound together with at least the outer layer.

4. The film for cell pouch according to any one of claims 1 to 3, wherein the film for cell pouch undergoes winding no more than twice during the manufacturing process.

5. The film for cell pouch according to any one of claims 1 to 4, wherein the metal of the barrier layer comprises one or more selected from the group consisting of aluminum or an alloy thereof, titanium or an alloy thereof, tungsten or an alloy thereof, molybdenum or an alloy thereof, copper or an alloy thereof, and stainless steel.

6. The film for cell pouch according to any one of claims 1 to 5, wherein the outer layer comprises one or more resins selected from the group consisting of nylon resin, polyethylene terephthalate (PET), and polybutylene terephthalate (PBT) resin.

7. The film for cell pouch according to claim any one of claims 1 to 6, wherein a surface treatment layer is formed on the barrier layer.

8. The film for cell pouch according to any one of claims 1 to 7, wherein the inner surface adhesive layer and the outer surface adhesive layers comprise one or more of an epoxy-based adhesive, a polyurethane-based adhesive, a phenol resin-based adhesive, a polyolefin-based adhesive, and a polyester-based adhesive.

9. The film for cell pouch according to any one of claims 1 to 8, wherein the inner surface adhesive layer is an adhesive coating layer; an extrusion coating layer; or an adhesive coating layer and extrusion coating layer.

10. The film for cell pouch according to any one of claims 1 to 9, wherein the sealant layer is a sealant film or an extruded resin layer.

11. A secondary battery, **characterized by** being packaged with the cell pouch according to any one of claims 1 to 10.

12. A method for manufacturing the film for cell pouch according to any one of claims 1 to 10, the method comprising:
a both-sided surface treatment step of surface-treating both-sided surfaces of the metal raw material contained in the barrier layer;
an outer surface adhesive layer coating step of applying an adhesive to one side surface of the surface-treated metal raw material to form an outer surfaces adhesive layer; and
an outer layer lamination step of laminating the outer layer raw material to the top of the outer surface adhesive layer;
wherein,
the film for cell pouch undergoes winding no more than twice during the manufacturing process, and
the barrier layer in the film for cell pouch is either wound together with the outer layer, or wound together with the outer layer and the sealant layer, without being wound alone during the manufacturing process.

13. The method according to claim 12, wherein the both-sided surface treatment step comprises : sequentially performing surface treatment on the other side of the metal raw material without the drying step, immediately after the surface treatment on the one side of the metal raw material; and/or
wherein the both-sided surface treatment step comprises : the performing a first coating on one side of the metal raw material by applying the water-based and solvent-based coating solution using a combination of Direct coating and Reverse Kiss Coating (RKC) methods, and
performing a second coating on the other one side of the metal raw material by applying a coating solution using RKC and Film up/down coating methods.

14. The method according to claim 12 or 13, the method further comprising:
a physical property stabilization drying step of drying the metal raw material having both-sided surfaces surface-treated in a floating manner to stabilize physical properties between the both-sided surface treatment step and the outer surface adhesive layer coating step.

15. The method according to any one of claims 12 to 14, the method comprising:
performing a first winding after the outer layer lamination step;
an inner surface adhesive layer coating for forming an inner surface adhesive layer by applying adhesive on the other one side where the outer layer is not laminated in the surface-treated metal raw material after the first winding; and
laminating a sealant layer raw material to the bottom of the inner surface adhesive layer; and
performing a second winding after laminating the said sealant layer raw material.
